# EUROPEAN PATENT APPLICATION

(11) **EP 4 811 000 A1**
(43) Date of publication of application: **23.09.2026**
(21) Application number: 25193045.9
(22) Date of filing: 31.07.2025
(51) Int. Cl.: G01S 17/86, G01S 17/87, G01S 17/89, G01S 17/931, G01S 13/86, G01S 13/87

(54) **METHOD AND COMPUTER SYSTEM FOR SYNCHRONIZING RANGING SENSORS**

(30) Priority: 18.03.2025 DE 102025110383
(71) Applicant: dSPACE SE & Co. KG, 33102 Paderborn (DE)
(72) Inventor: Darwin, Oscar, 76227 Karlsruhe (DE); Roy, Guillaume, 76227 Karlsruhe (DE); DeLay, Andrew, 76227 Karlsruhe (DE); Orsini, Marie-Lou, 76227 Karlsruhe (DE); Romanski, Simon, 76131 Karlsruhe (DE)

(57) **Abstract**

A computer-implemented method for synchronizing two ranging sensors that are fixed on a vehicle with at least partially overlapping measuring zones comprises receiving a plurality of sensor frames of a first and a second ranging sensor, wherein a sensor frame comprises a point cloud with each point comprising spatial coordinates and a measurement time, selecting a first sensor frame of the first ranging sensor and a second sensor frames of the second ranging sensor based on temporal correlation, identifying dynamic objects in the first sensor frame and identifying dynamic objects in the second sensor frame, wherein identifying a dynamic object comprises clustering points. For identified dynamic objects, the steps of estimating a transformation for mapping the dynamic object in the first sensor frame to the dynamic object in the second sensor frame, determining a timestamp, and calculating a registered object based on the first sensor frame, the second sensor frame, the at least one time stamp and the estimated transformation are performed, wherein the registration of objects is performed locally in a region around the object based on the time stamp. The method further comprises constructing a registered frame by combining the registered objects.

## Description

The present invention relates to methods and computer systems for automatically registering data frames from ranging sensors, in particular point clouds from multiple LIDAR sensors.

Training data for autonomous vehicles typically are prepared based on the recording of many different driving scenarios by a vehicle equipped with a set of sensors comprising not only cameras, but also lidar sensors and/or radar sensors. Before using these recorded scenarios as training data, they need to be annotated. The exact annotations required (e.g. the object classes to be distinguished) depend on each project and are specified in the detailed labeling specification. Automation approaches use tool chains comprising multiple automation components, in particular neural networks, to label the recorded sensor data. An initial set of received data is labeled manually and then used to train neural networks. Once sufficiently trained, the neural networks can annotate the bulk of the recorded image acquisition sensor data. Compared to a purely manual approach, this reduces the effort considerably.

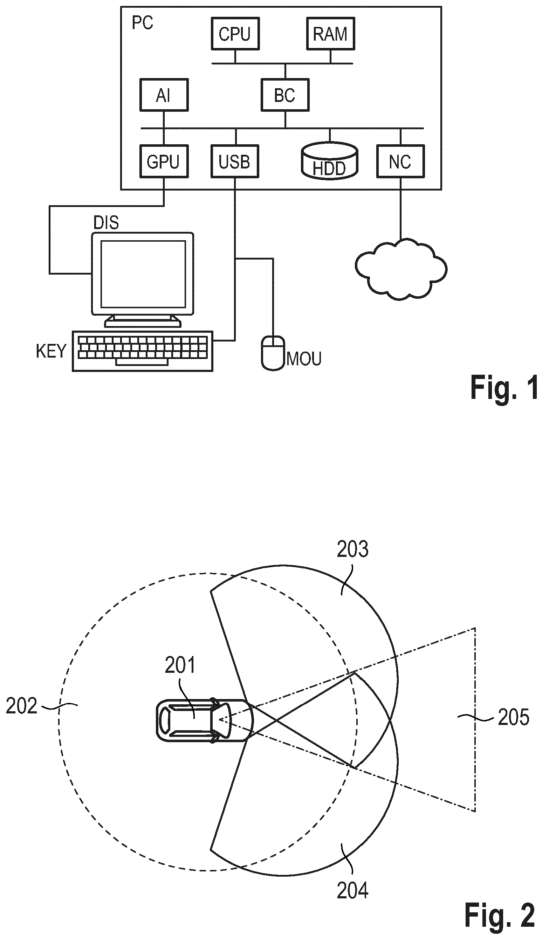

Autonomous vehicles increasingly use multiple ranging sensors such as LIDAR sensor for recording spatial data of the surroundings, and a front-facing camera for recording images. An example setup is schematically indicated in top view in figure 2: A vehicle 201 that is driving to the right is equipped with a surround LIDAR 202 (dashed measuring zone), a left-facing LIDAR 203 and a right-facing LIDAR 204 (measuring zones indicated by solid lines) as well as a front-facing camera 205 (dash-dotted measuring zone).

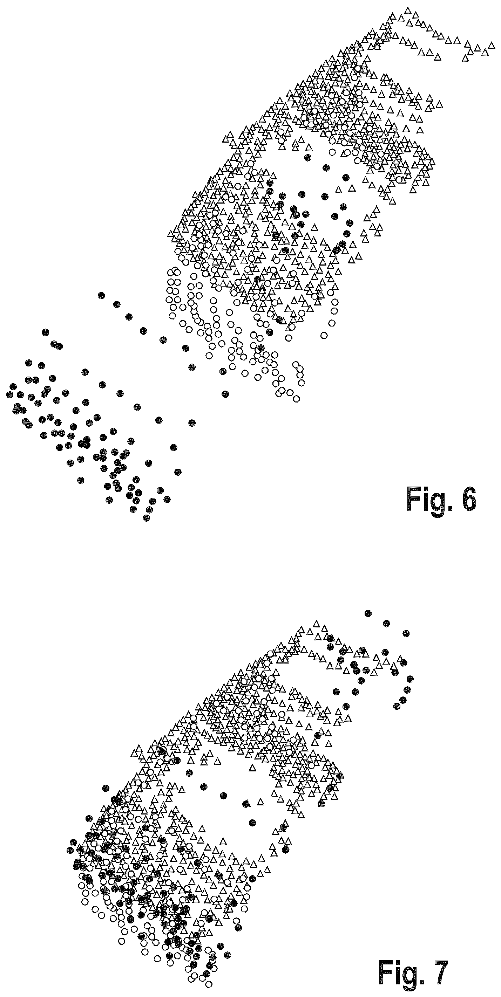

In front of the vehicle, where the measuring zones of the different LIDAR sensor overlap, objects are visible in multiple point clouds. For instance, figure 6 displays a vehicle as seen in three temporally correlated point clouds of LIDAR sensor from three sensors. As the term temporally correlated indicates, the point clouds were measured approximately simultaneously.

However, the recording time for a LIDAR frame is considerably longer than typical exposure times of cameras. This leads to multiple apparent positions of a dynamic object such as a fast vehicle, as the vehicle moves between the effective measurement times of the corresponding points by the different LIDAR sensors. For high-quality annotations, in particular tight and well-defined bounding boxes, the positions of measured points corresponding to the same dynamic objects in multiple temporally correlated sensor data frames need to be corrected.

Thus, improved methods for calibrating and/or synchronizing multiple ranging sensors would be useful.

According to a first aspect of the invention, a computer-implemented method for synchronizing two ranging sensors, in particular LIDAR sensors, that are fixed on a vehicle so that the measuring zones of the two ranging sensors overlap at least partially, is provided. The method comprises
Receiving a plurality of sensor frames of a first and a second ranging sensor, wherein a sensor frame comprises a point cloud with each point comprising spatial coordinates and a measurement time,
Selecting a first sensor frame of the first ranging sensor and a second sensor frames of the second ranging sensor based on temporal correlation,
Identifying dynamic objects in the first sensor frame and identifying dynamic objects in the second sensor frame, wherein identifying a dynamic object comprises clustering points.

For identified dynamic objects, the steps of
Estimating a transformation for mapping the dynamic object in the first sensor frame to the dynamic object in the second sensor frame,
Determining a timestamp, and
Calculating a registered object based on the first sensor frame, the second sensor frame, the timestamp and the estimated transformation, wherein the point-set registration is performed locally in a region around the object, are performed.

The method further comprises constructing a registered frame by combining the registered objects.

Temporal correlation of sensor frames is related to the measurement times of the respective sensor. Preferably, sensor frames from different sensors are selected or grouped together when the sensor data frames were recorded within a specified short time interval. Due to this approximate simultaneity of the measurements, objects in the overlapping area of the measurement ranges must be visible in both the first and the second sensor frame. For LIDAR sensor data frames or LIDAR point clouds, an average value of the measurement times of the individual points of the LIDAR point cloud can be used as the measurement time of the sensor data frame. Alternatively, the start and end time of LIDAR sensor data frame can be compared. For a camera image and a LIDAR sensor frame, a simultaneous recording or a temporal correlation of the sensor data frames can be assumed if the recording time of the camera image is between the start and end time of the LIDAR point cloud.

The computer system performing the inventive method may be realized as a single host computer comprising a processor, e.g. a general-purpose microprocessor, a display screen and an input device. Alternatively, the computer system may comprise one or more servers comprising a plurality of processing elements such as processor cores or dedicated accelerators, the servers being connected via a network to a client comprising a display screen and an input device. In this way, the computations for the synchronization of the different ranging sensor frames can be partially or fully executed on a remote server, for example in a cloud computing environment, so that only a graphical user interface needs to be executed locally.

A ranging sensor is an imaging sensor that provides spatial information or three-dimensional information, so that sensor frames measured by the spatial sensor comprise 3D coordinates; in particular, the ranging sensor may be a LIDAR sensor or a radar sensor.

The inventive method can be used to preprocess lidar points both for human labelers and for automation components, in particular neural networks, which use linked 2D and 3D data. Advantageously, it allows for uniformly processing sensor frames from many ranging sensors. The measurement points from the different sensor are synchronized so that the combined point cloud appears as one consistent sampling at the frame timestamp. By estimating positions using an optimization algorithm, it is robust against sensor calibration errors and measurement noise. The inventive synchronization method seamlessly integrates in existing tool chains for labeling sensor data from multiple sensors. Moreover, the addition of points from multiple ranging sensors makes producing high-quality annotations easier, since objects have more coverage. An advantage of the invention consists in that it only uses frame-wise information, so that one frame of each sensor needs to be considered. In addition to reducing usage of resources such as memory, it also is resistant to noise coming from the motion of the vehicle. In the context of global object repositioning, this removes the need for complex cross-frame object matching. Multi-LIDAR alignment according to the inventive method works well for vehicles moving at high speeds, a domain in which the precise identification is particularly hard for human labelers.

In an embodiment, identifying dynamic objects in a point cloud comprises determining a ground mesh, removing ground points from the point cloud, clustering points to determine candidate objects, and discarding candidate objects that do not conform to predefined rules. Synchronizing objects measured in multiple sensors is particularly useful for dynamic objects such as cars. Removing ground points or very large objects such as buildings from the point clouds before processing, allows for a reduced usage of computer resources and facilitates identifying dynamic objects by creating blank space between clusters corresponding to different objects.

It is advantageous when the predefined rules comprise requiring a minimum number of points to be present in the cluster, preferably more than 10 points, in particular a minimum of 100 points, requiring the horizontal dimensions of the cluster to be smaller than a length limit, preferably less than 50 meters, in particular a length limit of 24 meters, and/or requiring the points to have a minimum distance from the ranging sensor, in particular a minimum distance of 1 meter.

In an embodiment, combining the registered objects comprises determining a frame timestamp, wherein the placement for each registered object is determined based on the frame time stamp. By placing the registered objects based on a frame time stamp, i.e. synchronizing all objects to the same timestamp, the scene remains globally consistent. Another advantage of placing registered objects based on a frame timestamp is that for a processing toolchain, components requiring good synchronization between 2D and 3D measurements will see accuracy improvements. For example, a 3D Object Detector may use correlation between camera and LIDAR measurements for improving detection rates. Objects in 3D are detected by looking at lidar points that when projected onto a 2D camera image, fall within a bounding box containing an object detected in 2D. Thus, the better synchronization between the lidar points and 2D images allows for producing more accurate 3D bounding boxes.

For an object that is visible in only one of the ranging sensors, the initial position may preferably be kept. For an identified dynamic object, determining a timestamp may comprise calculating the mean measurement time for those points in the ranging sensor frame corresponding to that dynamic object.

In an embodiment, clustering points is performed using the DBScan algorithm. The algorithm has been found to be robust and accurate, in particular when performed after downsampling the point cloud and/or removing ground points.

In an embodiment, clustering points comprises receiving the coordinates of a bounding box enclosing the cluster. Thus, the bounding box may be provided by an algorithm, an automation component such as a neural network or a human labeler.

In an embodiment, the transformation for mapping the dynamic object in the first sensor frame to the dynamic object in the second sensor frame is a translation, wherein estimating the transformation comprises estimating a translation vector. This approximation is based on the observation that for land vehicles moving at typical speeds, both rotations and changes in height are negligible on a time scale that corresponds to the duration between consecutive LIDAR frames, such as 30 ms. Using the approximation reduces the computational effort considerably.

Preferably, estimating a translation vector is performed using a simplified Coherent Point Drift algorithm, wherein the simplified algorithm considers objects as rigid, i.e. they do not change their size, and only allows for translations of objects between consecutive frames. This was found to be particularly fast and robust for correcting LIDAR measurements of traffic scenes.

For more than two ranging sensors, the synchronization is preferably performed iteratively, wherein for each dynamic object identified in a sensor frame, a detection time is determined, wherein the order of processing objects detected in multiple sensor frames is determined based on comparing the detection times. Processing an object comprises first producing a partial registered object based on the frames of the two ranging sensors in which the object was detected closest in time, then synchronizing the partial registered object with the identified object in the frame of a third ranging sensor to produce a combined partial registered object. For more than three sensors, the frame of the third ranging sensor is chosen based on the next closest detection time, and sensor frames of further ranging sensors are iteratively synchronized to the combined partial registered objects in increasing distance of detection time. Advantageously, his registration is done object by object by looking at a region encompassing the object (and ideally comprising only the points in the object) in all ranging sensors that detected it. Due to the measurement regions and processes of the different ranging sensors, the order of registration may differ for different objects. It is advantageous to perform the registration object-wise in order to determine the different translation vectors for each object region in the different ranging sensors.

In an embodiment, a front-facing camera is fixed to the vehicle, and the frame timestamp is determined based on an acquisition time of the front-facing camera. This allows for obtaining a consistent frame that can easily be processed in combination with the image of the front-facing camera.

According to a second aspect of the invention, a computer-implemented method for annotating sensor data is provided. The method comprises synchronizing the sensor frames of two ranging sensors according to the inventive method to produce registered sensor frames, labeling the registered sensor frames to produce three-dimensional bounding boxes, projecting the corners of a three-dimensional bounding box in the registered sensor frame to the image plane of the front-facing camera to produce a projected rectangle, using the projected rectangle as two-dimensional bounding box in the camera frame, and determining at least one attribute of the object based on the camera frame. The attribute may be a class of the object and/or a class-dependent status of the object; for instance, activation of an indicator light of a car.

According to a third aspect of the invention, a non-transitory computer readable medium is provided that comprises instructions which, when executed by a processor of a computer system, cause the computer system to perform the inventive method.

According to a fourth aspect of the invention, a computer system is provided that comprises a host computer, the host computer comprising a processor, a working memory, a display, an input device and a non-volatile memory, the non-volatile memory comprising instructions which, when executed by the processor, cause the computer system to perform the inventive method.

The processor may be a general-purpose microprocessor commonly used as the central processing unit of a personal computer, or it may comprise one or a plurality of processing elements configured to perform specialized computations, such as a graphics processor. In alternative embodiments of the invention, the processor may be replaced or supplemented by a programmable logic device, such as an FPGA configured to provide a fixed set of functions, and/or may comprise an IP core microprocessor.

The invention is explained in more detail below with reference to the drawings. Here, similar parts are labeled with identical designations. The embodiments shown are highly schematized, i.e. the distances and the lateral and vertical dimensions are not to scale and, unless otherwise indicated, do not have any derivable geometric relationships to one another.

In the drawings:
- Figure 1: shows an exemplary embodiment of a computer system,
- Figure 2: shows a schematic diagram of a vehicle with multiple sensors that have overlapping measurement zones,
- Figure 3: shows a flow chart of a method for synchronizing ranging sensors according to the invention,
- Figure 4: shows an exemplary region with overlapping sensor frames from multiple ranging sensors,
- Figure 5: shows the exemplary region with ground points removed,
- Figure 6: shows an exemplary dynamic object with measurement points from three ranging sensors,
- Figure 7: shows the exemplary dynamic objects after synchronization of the ranging sensors,
- Figure 8a: shows an exemplary dynamic object with determined positions for three ranging sensors and a position of the object corresponding to a frame time,
- Figure 8b: shows the exemplary dynamic object with synchronization to the frame time, and
- Figure 9: shows synchronized measurements from a back of a truck over multiple frames.

Fig. 1 illustrates an exemplary embodiment of a computer system. The shown embodiment comprises a host computer PC having a display DIS and human interface devices such as a keyboard KEY and a mouse MOU; furthermore, an external server may be connected via a network, as indicated by a cloud symbol.

The host computer PC comprises at least one processor CPU having one or multiple cores, a main memory RAM, and a number of devices connected to a local bus (such as PCI Express), which exchanges data with the CPU via a bus controller BC. The devices comprise e.g., a graphics processing unit GPU for driving the display, a controller USB for attaching peripherals, a non-volatile memory HDD such as a hard disk or a solid-state disk, and a network interface NC. Additionally, the host computer may comprise a dedicated accelerator AI for neural networks. The accelerator may be implemented as a programmable logic device such as an FPGA, as a graphics processing unit suitable for general calculations, or as an application-specific integrated circuit. Preferably, the non-volatile memory comprises instructions that, when executed by one or more cores of the processor CPU, cause the computer system to carry out a method according to the invention.

In alternative embodiments, indicated as a cloud in the figure, the host computer may comprise one or more servers comprising one or more processing elements, the servers being connected, via a network, to a client comprising a display device and an input device. Thus, the annotation environment may be executed partially or completely on a remote server, such as in a cloud computing setup. A personal computer may be used as a client which comprises a display device and an input device via a network. Alternatively, a graphical user interface of the annotation environment may be displayed on a portable computer system, in particular a smartphone or a tablet having a touchscreen user interface.

Fig. 2 shows a schematic diagram of a vehicle with multiple sensors that have overlapping measurement zones in top view. The vehicle 201 is driving to the right and is equipped with a surround LIDAR 202 (dashed measuring zone), a left-facing LIDAR 203 and a right-facing LIDAR 204 (measuring zones indicated by solid lines) as well as a front-facing camera 205 (dash-dotted measuring zone). In front of the vehicle, i.e. to the right side of the image, the measuring zones of the different LIDAR sensor overlap, so that objects are visible in multiple point clouds.

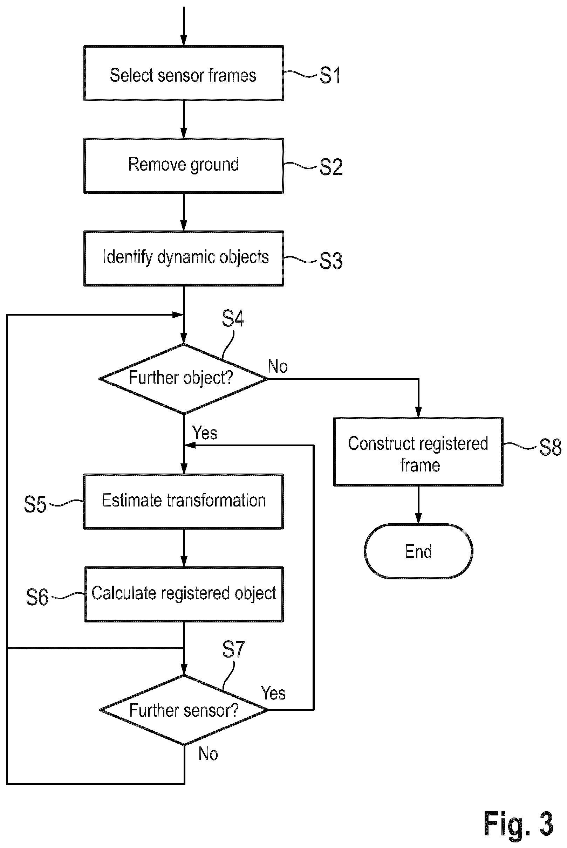

Figure 3 shows a flow chart of a method for synchronizing ranging sensors according to the invention. For simplicity, the relative orientation of the multiple sensors is assumed to be calibrated. Thus, the position as well as the orientation of the multiple sensors in space or their relative position and orientation relative to the vehicle they are attached to is assumed to be known. In principle, this calibration could also be provided as an initial step by methods known in the art.

In step S1 (Select sensor frames), sensor data frames, in particular LIDAR point clouds, from different sensors are grouped together when the sensor data frames were recorded within a specified short time interval, such as e.g. 20 ms. The sensor frames comprise multiple LIDAR points that specify a location in 3D space (i.e. three spatial coordinates) as well as the time at which the respective LIDAR point was captured. Preferably, each LIDAR point also comprises an indication of the sensor that measured the respective LIDAR point; this information can be taken from the frame information and then added to the LIDAR points in that frame. For reducing the memory usage as well as the computational complexity, this step may also comprise downsampling the LIDAR points to coordinates of lower resolution. Preferably, voxel-based downsampling of the point-cloud is performed.

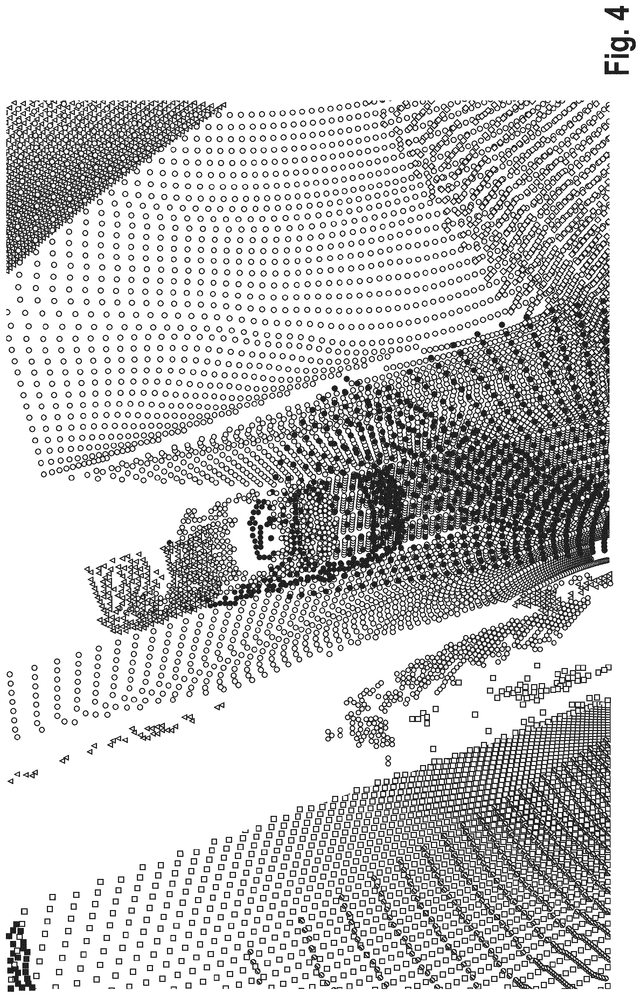

To illustrate the inventive method, an exemplary point cloud is given for different steps. Figure 4 shows an exemplary region with overlapping sensor frames from multiple ranging sensors. The exemplary point cloud comprises LIDAR points from multiple sensors captured within a 100 ms period.

In step S2 (Remove ground), LIDAR points that have sampled areas of the ground are removed. Removing these ground points comprises identifying areas in the sensor frame that are flat, e.g. by determining adjacent points whose Z / height coordinates differ by less than a height threshold, and extrapolating a ground mesh based on the identified flat areas. An exemplary method for generating a mesh representation of the ground is for instance disclosed in EP 4198870 A1 (as an intermediate step for generating a birds-eye-view image of a street). Those points in the LIDAR frame that are close to the ground mesh, e.g. whose Z coordinates differ by less than the height threshold from the height of a nearby part of the ground mesh, are determined to be ground points and are removed, so that only non-ground points undergo the further processing steps.

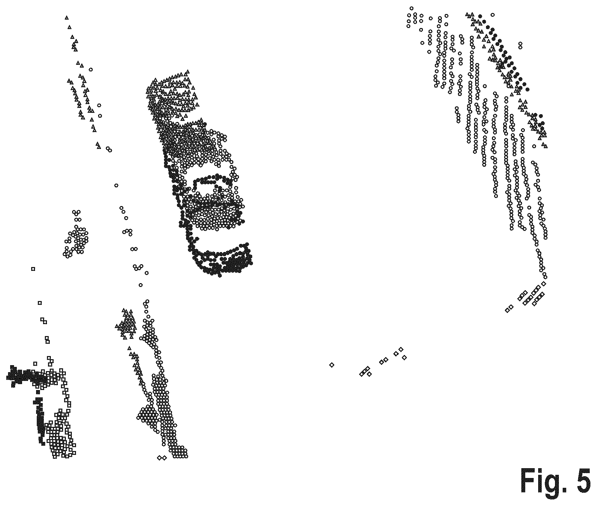

Figure 5 shows the exemplary region with ground points removed; after determining a ground mesh, only LIDAR points that are outside of 30 cm from the ground plan mesh are kept.

In step S3 (Identify dynamic objects), the LIDAR points are clustered into separate groups of points that may indicate the presence of an object. Preferably, clustering points is performed using the DBScan algorithm; details of the algorithm are described in the paper "A Density-Based Algorithm for Discovering Clusters in Large Spatial Databases with Noise" by Martin Ester et al., Proceedings of the 2nd International Conference on Knowledge Discovery and Data Mining (KDD-96). Each cluster of LIDAR points indicates a candidate object, however, not all candidate objects are actually dynamic objects that are of interest for the further synchronization steps.

Thus, candidate objects that do not conform to one or more predefined rules are preferably discarded. The predefined rules may comprise requiring a minimum number of points to be present in the cluster, preferably more than 10 points, in particular a minimum of 100 points. This allows for removing erroneously detected and/or too small objects. Further, the predefined rules may comprise requiring the horizontal dimensions of the cluster to be smaller than a length limit, preferably less than 50 meters, in particular a length limit of 24 meters. In this way, buildings and other static structures too big to be a vehicle are removed. Additionally, the predefined rules may comprise requiring the points to have a minimum distance from the ranging sensor, in particular a minimum distance of 1 meter. Objects this close may result from a capture of the ego vehicle itself and thus may be considered a measurement error. Candidate objects that conform to the predefined rules are considered dynamic objects and processed in the following steps.

In step S4 (Further object?), a dynamic object / cluster that has not been synchronized or registered is selected. If all points in the cluster were measured by the same LIDAR sensor, i.e. the dynamic object is visible in only one of the ranging sensors, the initial position of the object is kept and processing continues by selecting the next cluster that has not been synchronized. Once no unprocessed dynamic object remains, the execution continues in step S8.

Figure 6 shows an exemplary dynamic object with measurement points from three ranging sensors.

In step S5 (Estimate transformation), the selected cluster comprises LIDAR points from multiple sensors that show the same dynamic object, so that a transformation mapping the dynamic object measured in a first sensor to the dynamic object measured in a second sensor can be determined. For the current discussion, it is assumed that the selected cluster contains only measurement points from two ranging sensors. The case of three or more ranging sensors can be resolved by iteratively determining transformations based on measurement points of different sensor pairs, as discussed below.

For determining the transformation between the object captured in the first sensor and the object captured in the second sensor, the Coherent Point Drift Object Registration algorithm can preferably be used. Details of the algorithm are described in the paper "Point Set Registration: Coherent Point Drift" by Andriy Myronenko and Xubo Song, arXiv:0905.2635v1. Generally, the CPD algorithm uses an Expectation Maximization approach to find the local minima of an objective function. In principle, the Iterative Closest Point (ICP) algorithm can alternatively be used for determining the transformation between different captures of the same object.

The two sets of LIDAR points are assigned to be either the *source* or *target* point set respectively. The CPD algorithm simultaneously fits a Gaussian mixture model (GMM) with added uniform noise term to the target point set and then also maximizes the probability that the source point set with applied transformation was randomly generated by the GMM distribution fit to the target points. The purpose of the optimization procedure is to compute a transformation matrix that best maps the source point set to the target point set. The main input variables to the optimization function are the translation and variance of the GMM although other hyperparameters may be considered, such as the weighting of the noise term in the GMM.

As the input data for estimating the transformation are part of two sensor frames that were measured within a period of roughly 30 ms, the transformations can be simplified. Even the fastest moving dynamic objects in realistic traffic scenes do not rotate within that period, so that rotation can be ignored. Additionally, the dynamic objects, which are mainly vehicles, do not change size and may be considered as rigid. Further, ground vehicles relevant for traffic scenes don't tend to change height rapidly. Thus, the CPD algorithm can be simplified to only allow for translations without height components. This restriction of the variables to be optimized considerably speeds up calculations: Instead of computing a transformation matrix, only a 2-dimensional translation vector needs to be determined.

Let *x*₁*,..., x_{N}* and *y*₁*,..., y_{M}* be two sets of 3 dimensional points. Let *w* ∈ [0,1] be the weighting of the noise term in the GMM. Based on the original CPD paper the objective function is preferably $f \left(t, σ\right) = \frac{1}{2 {σ}^{2}} {\sum }_{n = 1}^{N} {\sum }_{m = 1}^{M} \left[{Q}_{n , m}\left(t, σ\right){\left‖{x}_{n}-{y}_{m}-t\right‖}^{2}+\frac{3}{2}log {σ}^{2}\right]$ where ${Q}_{n , m} \left(t, σ\right) = \frac{{P}_{n , m} \left(t, σ\right)}{c \left(σ\right) + {\sum }_{k = 1}^{M} {P}_{n , k} \left(t, σ\right)}$ and ${P}_{n , m} \left(t, σ\right) = exp \left(-\frac{1}{2 {σ}^{2}}\left‖{x}_{n}-{y}_{m}-t\right‖\right)$ and $c \left(σ\right) = {\left(2{πσ}^{2}\right)}^{3 / 2} \frac{w}{1 - w} \frac{M}{N}$.

In the Expectation Maximization approach taken by the authors of CPD, fitting the GMM to the target points and maximizing the likelihood of the source points being emitted by the GMM are two separate optimization steps. According to a preferred embodiment of the invention, the steps are performed together. Unifying the two optimisation steps into a single optimisation function allows for directly using standard optimisation algorithms, such as optimisers from the scipy python library. In particular, global optimisation frameworks can be used that can solve a larger class of registration problems. According to a preferred embodiment of the invention, the optimization steps are performed with the *Dual-Annealing* global optimizer. Alternatively, the basin-hopping algorithm can be used.

In step S6 (Calculate registered object), the estimated translations are used to align the LIDAR points from both frames to the same time. This results in an accumulated group of LIDAR points, that allow for easier discerning the dynamic object.

The steps as currently discussed allow for aligning the measurements of the same dynamic object from two LIDAR sensors. In the case that more than two lidars capture the same object, it is advantageous to perform a sequence of registrations based on estimated translations via the simplified CPD algorithm in order to compute the translation vectors that, when applied, align all of the lidars capturing the object best. This corresponds to splitting the cluster of LIDAR points for the current object into the parts detected by each sensor. For the initial registration, as described above, step S5 initially comprises choosing the two LIDAR sensors whose points in the cluster have the closest mean timestamp.

Accordingly, in step S7 (Further sensor?), the processor checks whether a further LIDAR sensor has captured the current object. If the current object was only seen in two sensors (No), execution continues in step S4 in order to check whether an additional object has been captured by the LIDAR sensors. If the current object was indeed visible in a third sensor (Yes), execution continues at S5.

Thus, for more than two ranging sensors, the synchronization is preferably performed iteratively, wherein for each dynamic object identified in a sensor frame, a detection time is determined, wherein the order of processing objects detected in multiple sensor frames is determined based on comparing the detection times. The detection time for an object may be determined by calculating a mean time stamp for all the LIDAR points for that object in the respective sensor. After registering the object for the two LIDAR sensors whose points in the cluster have the closest mean timestamp, preferably the LIDAR sensor whose points in the cluster have the next closest mean timestamp to this pair is chosen. The method comprises performing the same registration algorithm from this newly picked LIDAR point set to the now grouped initial pair of lidar point sets. This procedure continues iteratively for each LIDAR sensor frame that captured the current object and has not yet been registered. Preferably, the next LIDAR sensor to be processed is always the lidar with the closest mean timestamp to the previously registered group of measurement points.

In other words, processing an object comprises first producing a partial registered object based on the frames of the two ranging sensors in which the object was detected closest in time, then synchronizing the partial registered object with the identified object in the frame of a third ranging sensor to produce a combined partial registered object. For more than three sensors, the frame of the third ranging sensor is chosen based on the next closest detection time, and sensor frames of further ranging sensors are iteratively synchronized to the combined partial registered objects in increasing distance of detection time. As this registration is done object by object, only the object region of the current object as seen in all LIDAR sensors that detected the object needs to be processed. The object region may be determined based on a bounding box encompassing the object; ideally, it only contains the points in the object and no external noise. Due to the differing measurement zones of the LIDAR sensors and the different measurement sequences, the order of registration may differ for different objects.

Figure 7 shows the exemplary dynamic objects after synchronization of the ranging sensors.

In step S8 (Construct registered frame), the registered objects as reconstructed in their respective region are merged to a complete frame. This comprises determining a frame time stamp, and placing all reconstructed objects based on the frame timestamp. Preferably, the timestamp of the image captured by the front camera is chosen as the frame timestamp.

Placing a reconstructed object comprises modeling its trajectory and determining the position of the object at the frame timestamp. For two ranging sensors, the translations determined in step S5 using the simplified CPD algorithm can be used. This corresponds to the movement of the object between the initial capture of the object by one ranging sensor and the subsequent capture of that object by the other ranging sensor.

Generally, this principle can be used for a robust estimation of the object's position for multiple LIDAR sensors. The position of an object starts with the centroid of points captured by the LIDAR sensor with the earliest timestamp or average measurement time for the points in the cluster for the object. Then the position of the object at the second LIDAR is determined. Then the position of the object is determined for the LIDAR sensor with the next timestamp until a position has been estimated for every LIDAR. Based on these positions, the trajectory of the object is modeled using weighted least squares linear regression. It is useful to choose the weights based on the number of points captured by each LIDAR, as this provides some extra outlier and noise robustness. The position of the object at the frame timestamp can be estimated from the model. Finally, the measurement points from the different sensors are accumulated at that position. Repeating that procedure for each object captured in two or more sensors allows for creating a registered sensor frame.

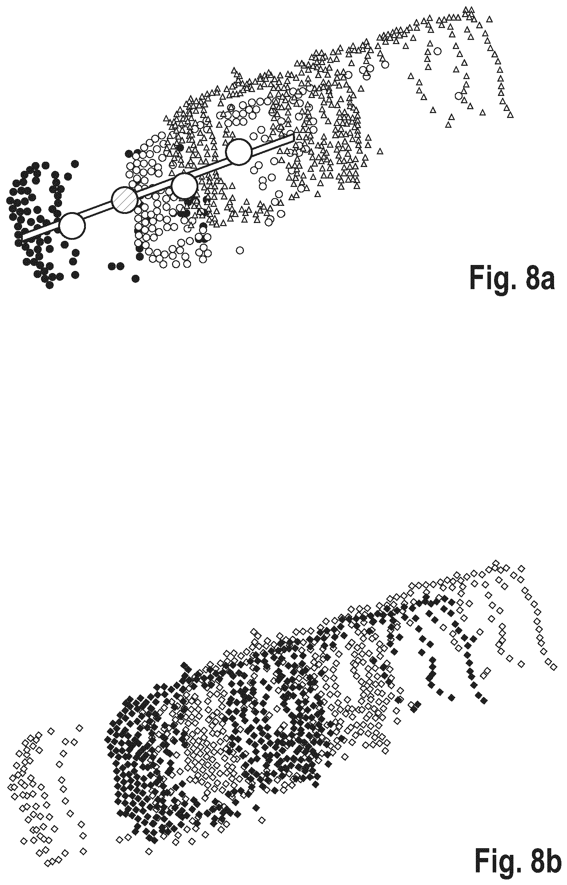

Figure 8a shows an exemplary dynamic object with determined positions for three ranging sensors and a position of the object corresponding to a frame time, and Figure 8b shows the exemplary dynamic object with synchronization to the frame time.

By synchronizing objects while only operating on the measurement points of a single frame, the inventive method is robust against noise coming from the motion of the vehicle. In the context of global object repositioning, this removes the need for complex cross-frame object matching.

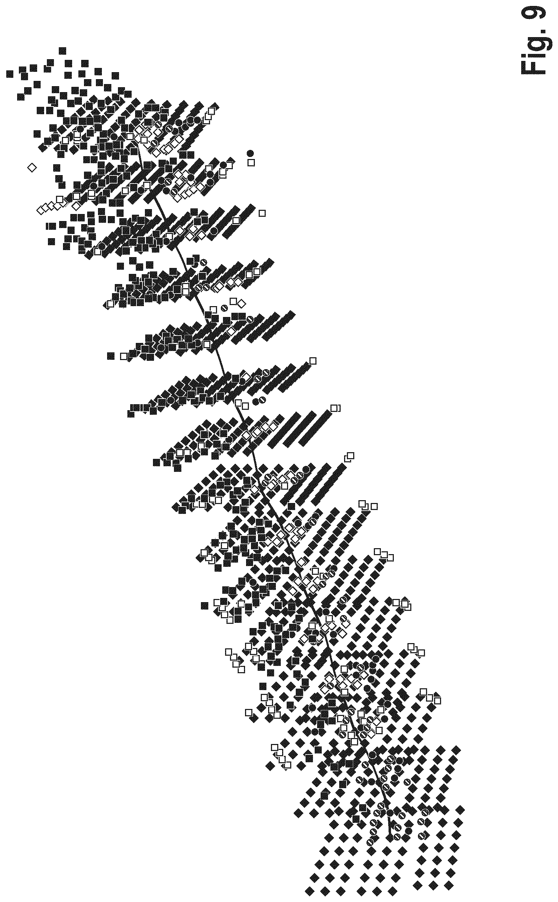

Figure 9 shows synchronized measurements from a back of a truck over multiple frames. The truck has been reconstructed, and its global position inferred using trajectory estimation as discussed above. Thus, this frame-wise trajectory estimation can produce consistent trajectories from frame to frame.

The inventive method allows for a faster and more robust synchronization in the context of multi-lidar object alignment.

## Claims

1. Computer-implemented method for synchronizing two ranging sensors, in particular LIDAR sensors, wherein the ranging sensors are fixed on a vehicle, so that the measuring zones of the two ranging sensors overlap at least partially, the method comprising
• Receiving a plurality of sensor frames of a first and a second ranging sensor, wherein a sensor frame comprises a point cloud with each point comprising spatial coordinates and a measurement time,
• Selecting a first sensor frame of the first ranging sensor and a second sensor frames of the second ranging sensor based on temporal correlation,
• Identifying dynamic objects in the first sensor frame and identifying dynamic objects in the second sensor frame, wherein identifying a dynamic object comprises clustering points,
• For identified dynamic objects, performing the steps of
∘ Estimating a transformation for mapping the dynamic object in the first sensor frame to the dynamic object in the second sensor frame,
∘ Determining a timestamp,
∘ Calculating a registered object based on the first sensor frame, the second sensor frame, the timestamp and the estimated transformation, wherein the point-set registration is performed locally in a region around the object, and
• Constructing a registered frame by combining the registered objects.

2. Method according to claim 1, wherein identifying dynamic objects in a point cloud comprises determining a ground mesh, removing ground points from the point cloud, clustering points to determine candidate objects, and discarding candidate objects that do not conform to predefined rules.

3. The method of claim 2, wherein the predefined rules comprise requiring a minimum number of points to be present in the cluster, preferably more than 10 points, in particular a minimum of 100 points, requiring the horizontal dimensions of the cluster to be smaller than a length limit, preferably less than 50 meters, in particular a length limit of 24 meters, and/or requiring the points to have a minimum distance from the ranging sensor, in particular a minimum distance of 1 meter.

4. The method of any preceding claim, wherein combining the registered objects comprises determining a frame timestamp, and wherein the placement for each registered object is determined based on the frame timestamp.

5. The method of any preceding claim, wherein for an object that is visible in only one of the ranging sensors, the initial position is kept.

6. The method of any preceding claim, wherein clustering points is performed using the DBScan algorithm.

7. The method of any preceding claim, wherein clustering points comprises receiving the coordinates of a bounding box enclosing the cluster.

8. The method of any preceding claim, wherein the transformation for mapping the dynamic object in the first sensor frame to the dynamic object in the second sensor frame is a translation, and wherein estimating the transformation comprises estimating a translation vector.

9. The method of claim 8, wherein estimating a translation vector is performed using a simplified Coherent Point Drift algorithm.

10. The method of any preceding claim, wherein for more than two ranging sensors, the synchronization is performed iteratively, wherein for each dynamic object identified in a sensor frame, a detection time is determined, wherein the order of processing objects detected in multiple sensor frames is determined based on comparing the detection times, the processing comprising first producing a partial registered object based on the frames of the two ranging sensors in which the object was detected closest in time, then synchronizing the partial registered object with the identified object in the frame of a third ranging sensor to produce a combined partial registered objects, wherein the frame of the third ranging sensor is chosen based on the next closest detection time, and wherein sensor frames of further ranging sensors are iteratively synchronized to the combined partial registered objects in increasing distance of detection time.

11. The method of any preceding claim, wherein a front-facing camera is fixed to the vehicle, and wherein the frame timestamp is determined based on an acquisition time of the front-facing camera.

12. Computer-implemented method for annotating sensor data, the method comprising synchronizing the sensor frames of two ranging sensors according to claim 1, the method further comprising labeling all of the consecutive spatial sensor frames, projecting the corners of a three-dimensional bounding box in the registered sensor frame to the image plane of the front-facing camera to produce a projected rectangle, using the projected rectangle as two-dimensional bounding box in the camera frame, and determining at least one attribute of the object based on the camera frame.

13. Non-transitory computer readable medium comprising instructions which, when executed by a processor of a computer system, cause the computer system to perform a method according to any one of the preceding claims.

14. Computer system comprising a host computer, the host computer comprising a processor, a working memory, a display, an input device and a non-volatile memory, the non-volatile memory comprising instructions which, when executed by the processor, cause the computer system to perform a method according to any one of the preceding claims.
